# EUROPÄISCHE PATENTSCHRIFT

(11) **EP 1 323 651 B1**
(45) Veröffentlichungstag und Bekanntmachung des Hinweises auf die Patenterteilung: **31.05.2006**
(21) Anmeldenummer: 02028719.9
(22) Anmeldetag: 20.12.2002
(51) Int. Cl.: B65G 49/06

(54) **Verfahren und Vorrichtung zum Sortieren von Glastafeln**
Process and apparatus for sorting glass sheets
Procédé et appareil pour trier des feuilles de verre

(30) Priorität: 24.12.2001 DE 10164071
(43) Veröffentlichungstag der Anmeldung: 02.07.2003
(73) Patentinhaber: HEGLA Fahrzeug- u. Maschinenbau GmbH & Co. KG, D-37688 Beverungen (DE)
(72) Erfinder: Rüschoff, Gerhard, 37671 Höxter (DE); Vollbracht, Manfred, 37688 Beverungen (DE); Riepe, Dieter, 37688 Beverungen (DE); Böhmer, Peter, 37688 Beverungen (DE)
(74) Vertreter: Patentanwälte Dr. Solf & Zapf

(56) Entgegenhaltungen:
- EP-A- 0 048 334
- EP-A- 0 620 171
- DE-A- 4 428 897
- DE-A- 19 728 044
- DE-U- 9 104 816

## Beschreibung

Die Erfindung betrifft ein Verfahren zum Sortieren von Glastafeln nach dem Oberbegriff des Anspruchs 1 und eine Vorrichtung zum Durchführen des Verfahrens nach dem Oberbegriff des Anspruchs 12.

Aus der DE 197 28 044 A1 ist eine Vorrichtung zum Sortieren von Glaszuschnitten bekannt mit einer Hebeeinrichtung zum Aufrichten von horizontal herangeförderten Glaszuschnitten in eine vertikale Lage, wobei ein Zwischenförderer vorgesehen ist, über welchen Glastafelzuschnitte einem Fächerregal zugeführt werden, um diese dort nach beliebigen Ordnungskriterien abzustellen, wobei auf der dem Zwischenförderer oder dem Fächerregal gegenüberliegenden Seite ein Pufferspeicher, insbesondere in Form eines Fächerregals vorgesehen ist. Dieser Pufferspeicher ist quer zur Förderrichtung verschieblich, so dass verschiedene Fächer nacheinander befüllbar sind. U.a. ist vorgesehen, auch eine Durchförderung durch den Pufferspeicher, insbesondere in einen Sammelbehälter für Glasbruch vorzusehen.

Aus der G 91 04 816.8 U1 ist eine Vorrichtung zum Sortieren von Glastafelzuschnitten bekannt, wobei die zuvor beschriebene Vorrichtung zum Aufrichten von Glastafeln verwendet wird, wobei die Glastafeln anschließend in einen oder mehrere quer zur Förderrichtung verschiebliche Fächerwagen einschiebbar sind.

Aus der EP 0 620 171 B1 ist eine Anlage zum Sortieren von Plattenmaterial, insbesondere beim Vorbereiten und Zuführen sortierter Glasscheiben zu einer Weiterbearbeitungsanlage bekannt. Auch bei dieser Anlage ist eine Aufstellmaschine vorhanden, welche in horizontaler Position zugeführte Glasscheiben in eine vertikale Position bringt. Anschließend werden die Platten mittels Zangen in einen Sortierwagen eingezogen. Der Sortierwagen hat zwei Zangen und entsprechend zwei Fächer zur Aufnahme je einer Glasplatte, wobei der Sortierwagen längs einer Führung verschiebbar ist, um einzelne Glasscheiben in nachgeordnete Fächerwagen zu überführen. Hierbei sind vier Fächerwagen in genau definierter Position längs der Führungsbahnen aufgestellt. Sind die Fächerwagen voll besetzt, werden sie in eine genau definierte Position vor eine Übergabevorrichtung zum Überführen der Glasscheiben in eine Weiterbearbeitungsanlage gebracht. In vorprogrammierter Reihenfolge können anschließend aus bestimmten Fächern Glasplatten oder Scheiben entnommen werden.

Aus der EP 0 048 334 A1 ist eine Vorrichtung zum Sortieren von unsortierten Glasscheiben einer Glasschneideanlage bekannt, wobei diese Sortiervorrichtung ein Fächergestell enthält, welches senkrechte Fächer aufweist. Längs dieses Fächergestells ist ein Verschiebewagen verfahrbar angeordnet, auf dem ein Fächerwagen angeordnet ist. Die Fächer des Fächerwagens sind mit unsortierten Glasscheiben gefüllt. Eine Übergabevorrichtung ist am Verschiebewagen und längs desselben verschieblich angeordnet, wobei die Übergabevorrichtung den Fächern des Fächerwagens Glasscheiben entnehmen kann und diese in einer vorprogrammierten, sortierten Reihenfolge in den Fächern des Fächergestells abstellen kann.

Bei den vorgenannten bekannten Einrichtungen ist von Nachteil, dass die üblicherweise verwendeten Speicher maximal vier Glastafeln aufnehmen können, wobei diese Puffereinrichtungen die Glastafeln entgegennehmen und sofort einsortieren müssen. Nach dem Einsortieren verfahren diese Speicher oder Zwischenspeicher wieder zur Luftkissenwand, um neue Glastafeln aufzunehmen. Ferner ist von Nachteil, dass durch die hintereinander in Reihe stehenden Fächerwagen die erforderliche Flexibilität fehlt und die Einsortierung und Heraussortierung aufwendig ist.

Aufgabe der Erfindung ist es, ein Verfahren und eine Vorrichtung zum Sortieren von Glastafeln zu schaffen, bei dem Leerlaufzeiten vermieden werden, der Flächenbedarf gering ist, ein schnelles Einsortieren erfolgt und die Position der Schichtseite der Glastafeln in einem Fächerwagen frei gewählt werden kann.

Die Aufgabe wird mit einem Verfahren mit den Merkmalen des Anspruchs 1 und einer Vorrichtung mit den Merkmalen des Anspruchs 12 gelöst.

Vorteilhafte Weiterbildungen sind in Unteransprüchen gekennzeichnet.

Ein vorteilhaftes Verfahren sieht vor, die Glastafeln nach dem Aufrichten einer Fördereinrichtung auf Schienen oder einer Drehvorrichtung zuzuführen, welche auf der Hochachse drehbar ist und demzufolge für eine nachgeordnete Luftkissenwand die Scheiben oder Tafeln mit jeweils entgegengesetzter Position der beschichteten Seite zu orientieren. Anschließend werden die Glastafeln in einen Zwischenspeicher eingefahren.

Die Erfindung wird im Folgenden lediglich beispielhaft anhand einer Zeichnung erläutert. Es zeigen dabei
- Fig. 1: eine stark schematisierte Draufsicht auf eine auf dem Sachgebiet verwendete Vorrichtung;
- Fig. 2: eine auf dem Sachgebiet verwendete Zwischenspeichereinrichtung in einer stark schematisierten Seitenansicht;
- Fig. 3: die Einrichtung nach Fig. 2 in einer stark schematisierten stirnseitigen Ansicht;
- Fig. 4: einen auf dem Sachgebiet verwendeten Zwischenspeicher in einer stark schematisierten Ansicht;
- Fig. 5: die Vorrichtung nach Fig. 1, wobei befüllte Fächerwagen in eine Abtransportposition gebracht sind und Fächerwagen aus einem Wartebereich in eine Einschubposition gebracht sind;

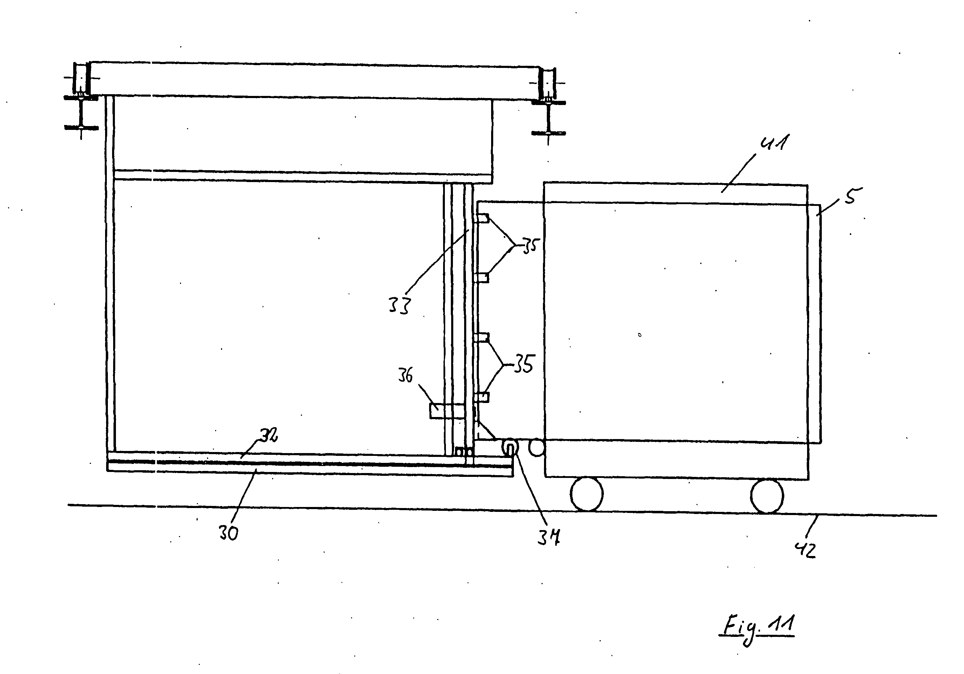

- Fig. 6: die Vorrichtung nach Fig. 1 in einer Variante , wobei die Fächerwagen nach dem Beladen nicht unter der Laufbahn der Speicher hindurch, sondern von den Speichern weg in eine Abtransportposition gefördert werden;
- Fig. 7 bis Fig. 12: eine auf dem Sachgebiet verwendete Speichereinrichtung in einer stirnseitigen Ansicht in verschiedenen Be- und Entladepositionen;
- Fig. 13: die Anlage nach Fig. 1 in einer schematisierten perspektivischen Draufsicht;
- Fig. 14: eine stark schematisierte Draufsicht auf die erfindungsgemäße Vorrichtung;
- Fig. 15: eine stark schematisierte Draufsicht auf die erfindungsgemäße Vorrichtung, wobei die Fächerwagen für die Zustellscheiben neben dem Zwischenspeicher positioniert sind.

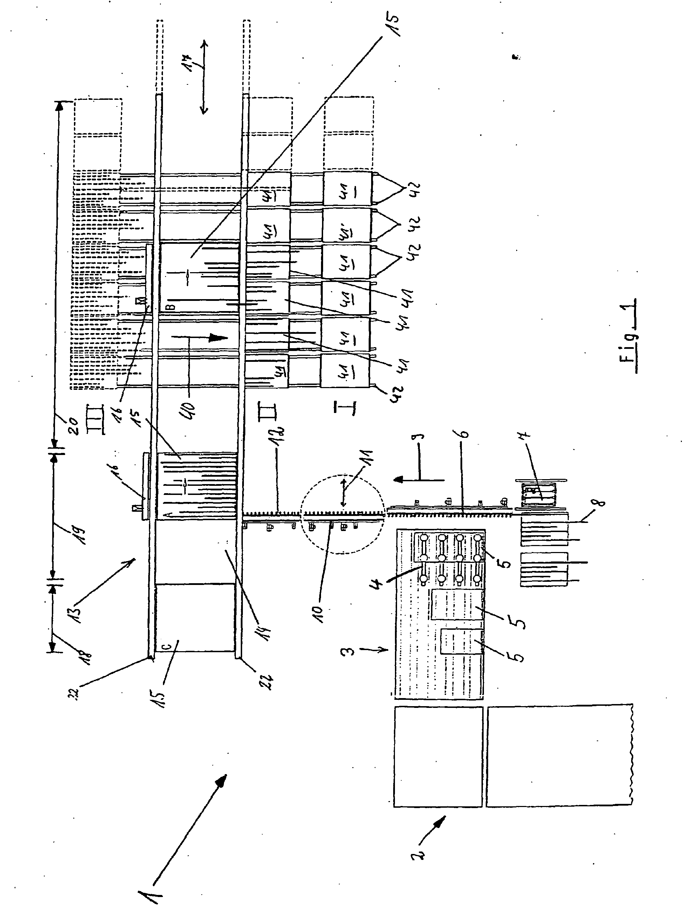

Eine auf dem Sachgebiet verwendete Vorrichtung 1 zum Sortieren von zugeschnittenen Glastafeln 5 (Fig. 1, Fig. 13) besitzt eine Zuschnittlinie 2, auf der Glastafeln in Einzelscheiben zerteilt werden. An die Zuschnittlinie 2 schließt sich ein Fördertisch 3 an, welcher mit Saugarmen 4 versehen ist. Mit den Saugarmen 4 werden auf dem Fördertisch aufliegende Scheiben 5 auf eine der Zuschnittlinie in Förderrichtung gegenüberliegend angeordnete Luftkissenwand 6 aufgestellt. Ferner kann eine Einschleusstation 7 für Sonderscheiben vorhanden sein, welche vertikal stehende Scheiben 8 auf die Luftkissenwand 6 fördern kann. Bezogen auf die Förderrichtung 9 der Luftkissenwand 6, ist der Luftkissenwand 6 eine Drehstation 10 nachgeordnet.

Die Drehstation 10 ist eine Luftkissenwand mit angetriebenen Transportrollen, welche um die senkrechte Mittelachse drehbar ist. Durch eine Drehung um 180 Grad wird die Lage der Schichtseite der Glastafeln oder Glasscheibe 5 in nachfolgenden Transport- und Sortierschritten eingestellt. Durch horizontales Verfahren der Drehstation 10 entsprechend der Pfeilrichtung 11 wird die Anlage an unterschiedliche Scheibendicken angeglichen. Der Drehstation 10 nachgeordnet ist eine Luftkissenwand mit Ausschub 12 angeordnet. In Transportrichtung 9 nachgeordnet ist die Zwischenspeicher- und Sortiereinrichtung 13 vorhanden. Die Zwischenspeicher- und Sortiereinrichtung 13 besitzt eine Verfahrbahn 14 sowie an der Verfahrbahn 14 verfahrbare Speicher 15. Die verfahrbaren Speicher 15 werden von an der Verfahrbahn angeordneten Antrieben 16 angetrieben, welche an die verfahrbaren Speicher an- und abkoppelbar sind.

Die Verfahrbahn 14 ist längs einer Verfahrrichtung 17 angeordnet, wobei die Förderrichtung 9 und die Verfahrrichtung 17 senkrecht aufeinander stehen, so dass die Luftkissenwand mit Ausschub 12 seitlich in die Verfahrbahn hineinfördern kann. Die Zwischenspeicher- und Sortiereinrichtung 13 bzw. die Verfahrbahn 14 der Zwischenspeicher- und Sortiereinrichtung 13 ist in einen Wartebereich 18, einen Einschubbereich 19 und in einen Einsortierbereich 20 unterteilt, die aufeinander folgend entlang der Förderrichtung 17 vorhanden sind. Die Luftkissenwand mit Ausschub 12 ist im Bereich des Einschubbereichs 19 angeordnet.

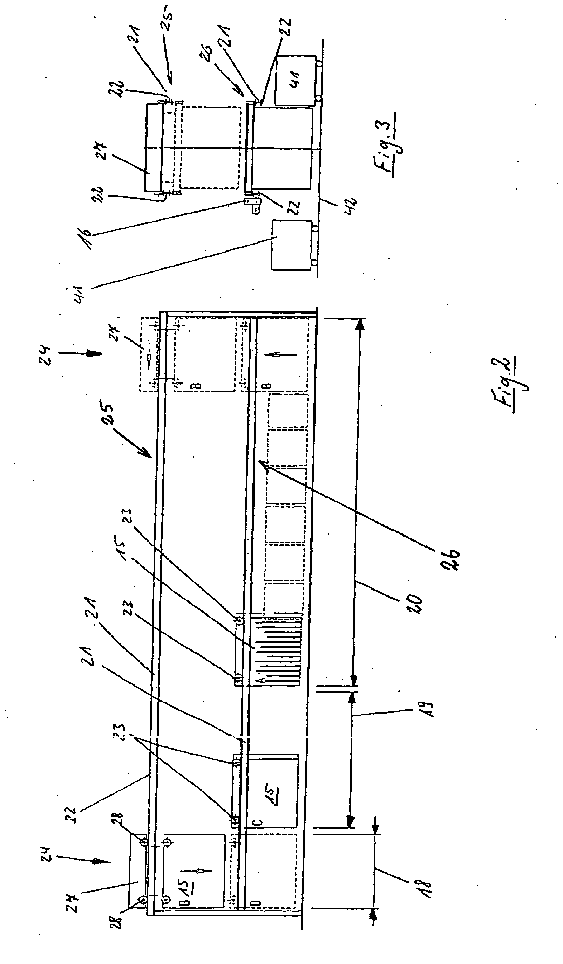

Die Zwischenspeicher- und Sortiereinrichtung 13 (Fig. 2, Fig. 3, Fig. 13) ist als Trägergestell mit zwei übereinanderliegend angeordneten Verfahrwegen 21 ausgebildet, wobei jeder Verfahrweg 21 aus zwei parallel zueinander entlang der Richtung 17 angeordneten Verfahrschienen 22 besteht. Auf den Schienen 22 laufen die verfahrbaren Speicher 15, wobei die verfahrbaren Speicher 15 angenähert eine kastenförmige Form haben und mit im oberen Bereich des Kastens angeordneten Rollen 23 auf den Schienen 22 rollen. Die Zwischenspeicher- und Sortiereinrichtung 13 bildet mit den übereinander angeordneten Verfahrwegen 21 einen Verfahrbahnobertrum 25 und einen Verfahrbahnuntertrum 26.

Auf dem Obertrum 25 der Verfahrbahn 14 ist zumindest eine Hubeinrichtung 27 mit Rollen 28 auf den Schienen 22 entlang der Schienen 22 verfahrbar. Die Hubeinrichtung 27 ist beispielsweise ein Verfahrkran nach Art einer Laufkatze. Die Hubeinrichtung 27 weist Greif- und Hebeeinrichtungen (nicht gezeigt) für die verfahrbaren Speicher 15 auf. Die verfahrbaren Speicher 15 können beispielsweise in den Endbereichen 24 der Verfahrbahn 14 von den Greifeinrichtungen aufgenommen werden, unter die Schienen 22 des Obertrums 25 gehoben werden und dann über andere verfahrbare Speicher 15, welche auf dem Untertrum 26 laufen, hinweg gehoben werden und an beliebiger Stelle auf dem Untertrum abgesetzt werden.

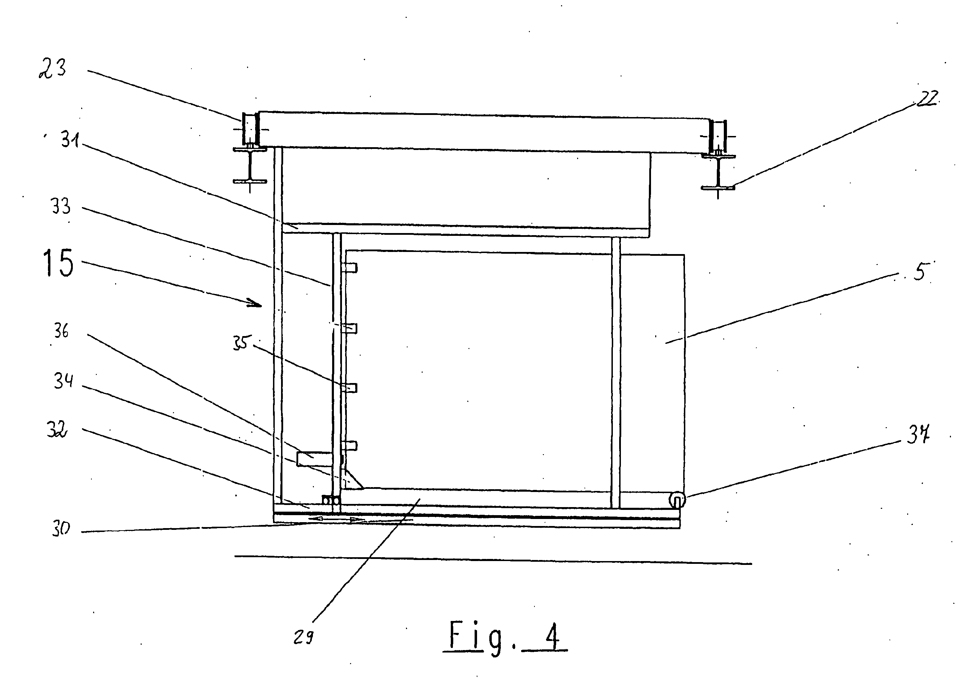

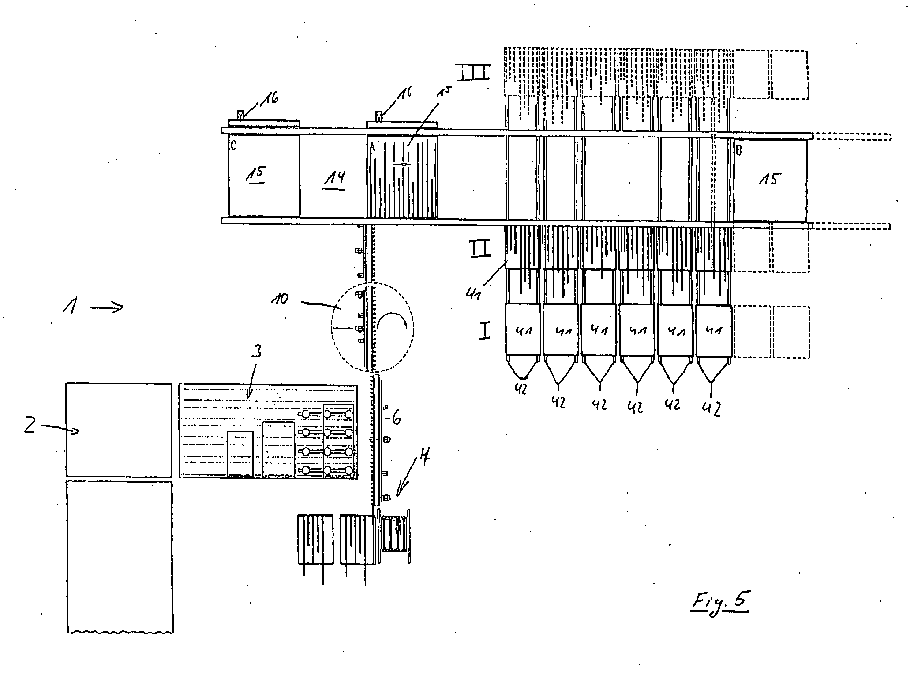

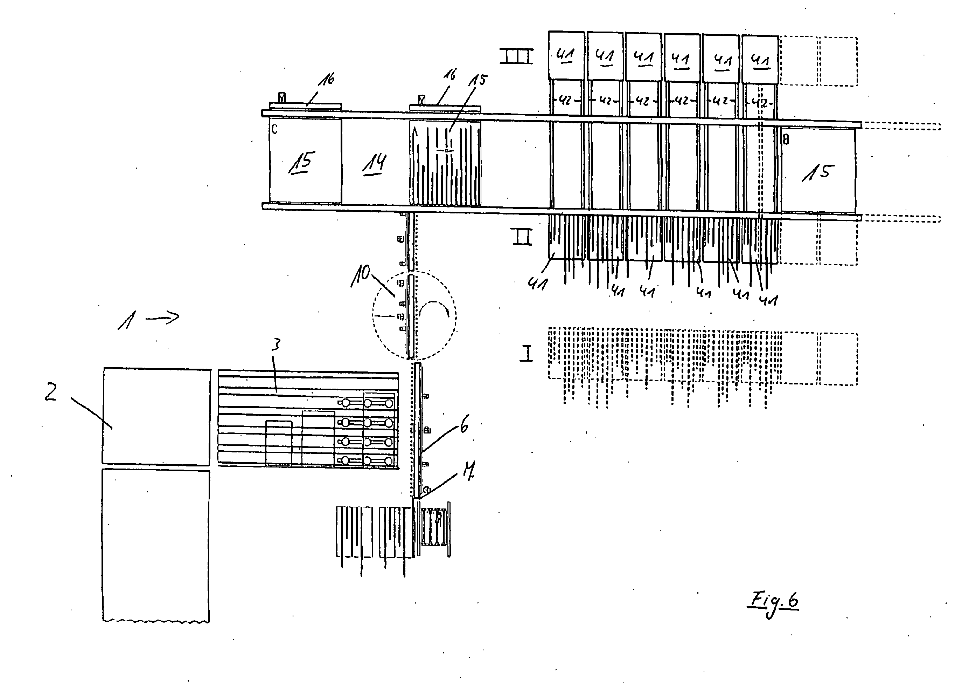

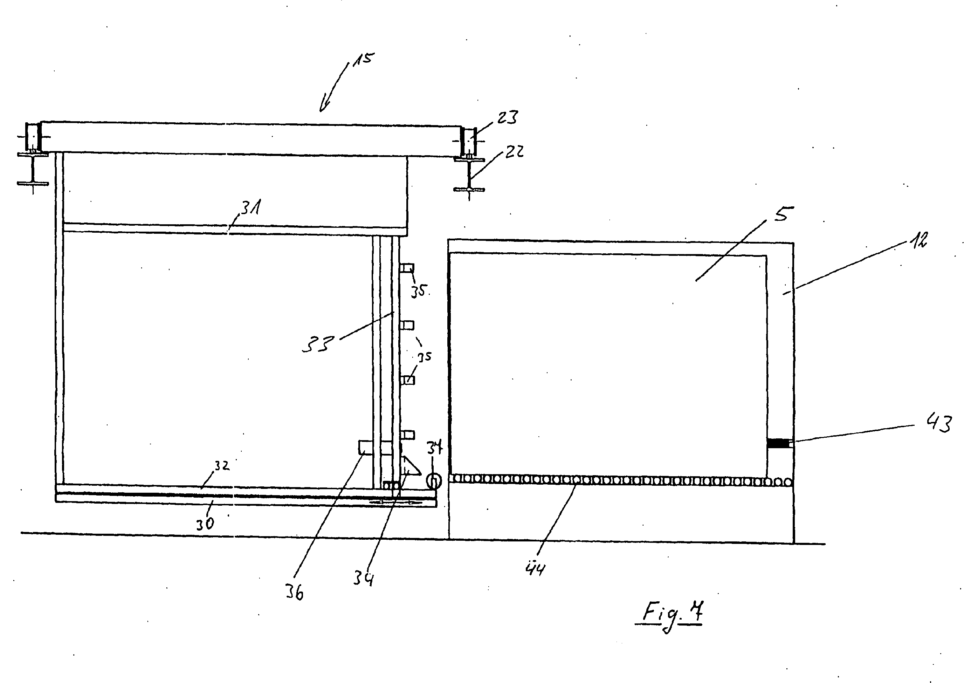

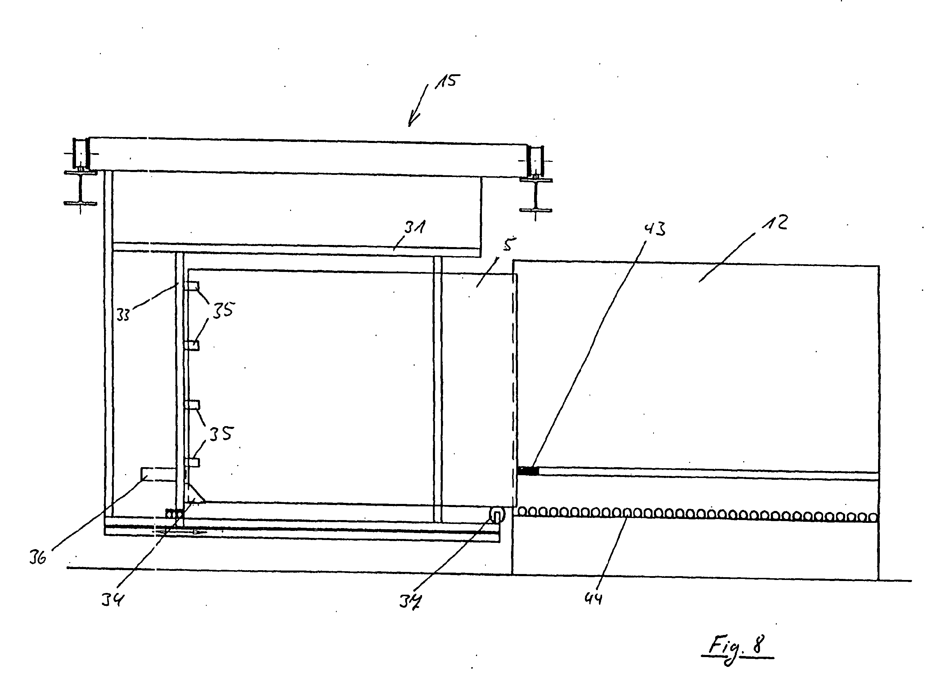

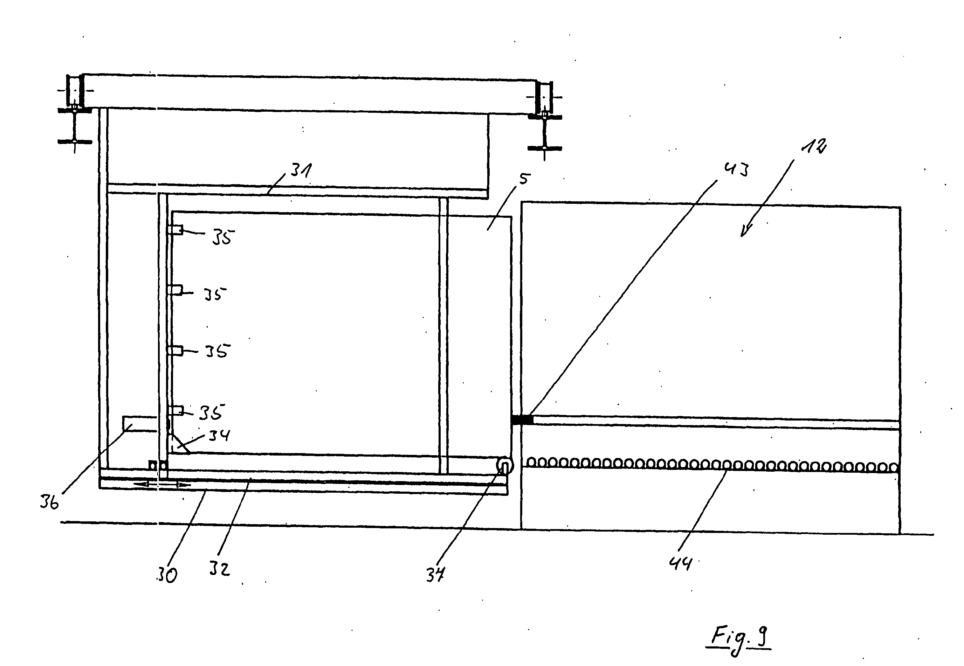

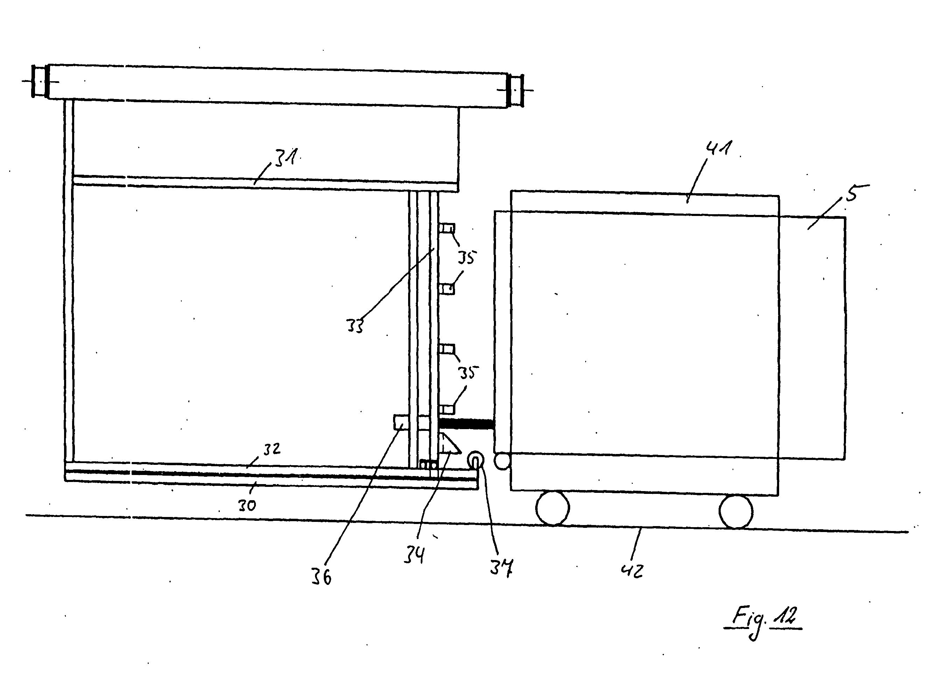

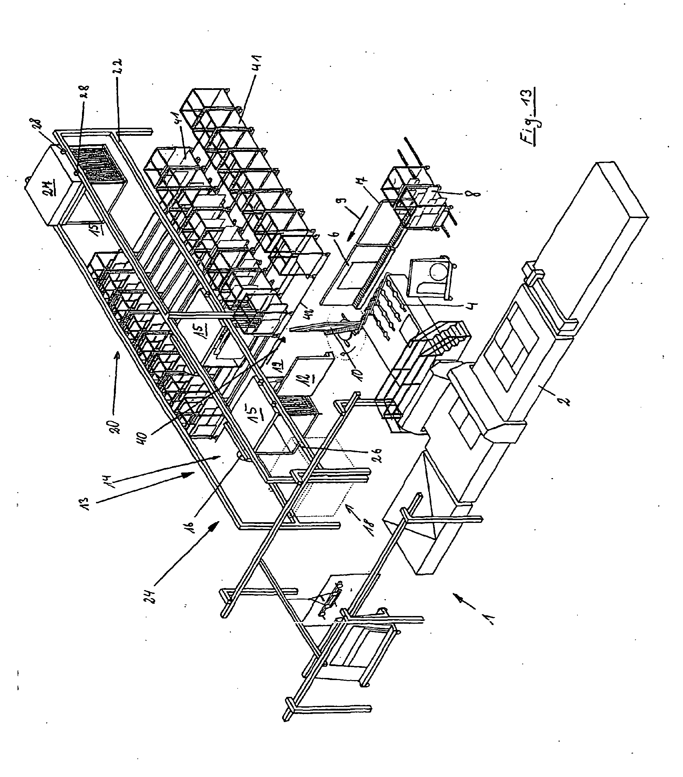

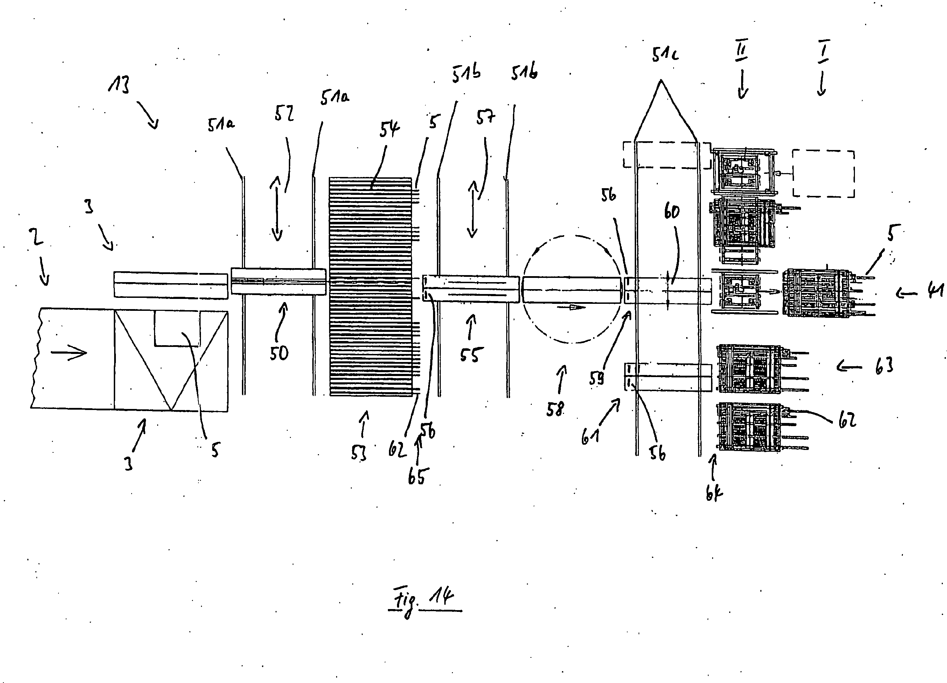

Die verfahrbaren Speicher 15 (Fig. 7 bis 12, Fig. 2) weisen Fächer 29 (Fig. 4) auf, die nebeneinander angeordnet sind. Der Speicher weist insbesondere bis zu 30 Fächer auf, die nebeneinander senkrecht zur Verfahrrichtung 17 ausgerichtet angeordnet sind. Jedes Fach besitzt eine eigene Antriebseinheit 30 sowie je eine obere Führung 31 und eine untere Führung 32. Die Antriebseinheiten können elektrische, pneumatische oder hydraulische Antriebseinheiten sein und können insbesondere mittels einer Bremse in jeder Position festgesetzt werden. Die Antriebe können kraftlos geschaltet werden. In den Führungen 31, 32 sind Führungsleisten 33 gehaltert, die unterseits mit der Antriebseinheit 30 verbunden sind. Auf den Führungsleisten 33 sind unterseits eine Zentrierecke 34 und darüber mehrere Halteklauen 35 ausgebildet. Die Halteklauen 35 sind V-förmig ausgebildet und berühren unabhängig von der Glasdicke nur die Scheibenkanten und beschädigen somit nicht die Beschichtung der Glastafel 5. Über der Zentrierecke 34 befindet sich ein Ausschieber 36, der beim Einschieben der Glastafeln 5 in die Fächerwagen 41 die Glastafeln 5 aus den Halteklauen in die Fächerwagen und in die endgültige Position dort schiebt. Am Eingang eines jeden Faches 29 befindet sich eine Stütz- und Führungsrolle 37. Im Einsortierbereich 20 sind in Ausschubrichtung bezogen auf den Ausschub der Glasplatten 5 aus den verfahrbaren Speichern 15 den Speichern 15 Fächerwagen 41 nachgeordnet. Die Fächerwagen 41 sind neben der Verfahrbahn 14 entlang dieser Verfahrbahn 14 in einem Ladebereich II aufgestellt angeordnet. Bei den Fächerwagen 41 handelt es sich um an sich bekannte Fächerwagen 41 zum Einsortieren von Glasplatten. Die Fächerwagen sind auf je einer Verschiebebahn 42 senkrecht zur Verfahrrichtung 17 der verfahrbaren Speicher 15 auch unter dem Untertrum 26 der Verfahrbahn 14 durch den Verfahrweg der verfahrbaren Speicher 15 hindurch auf die andere Seite der Verfahrbahn 14 in einen Weitertransportbereich III verfahrbar oder von dem Bereich II weiter von dem Verfahrweg 14 weg in einen Bereitstellungsbereich I verfahrbar.

Im Folgenden wird die Funktionsweise der eben beschriebenen Vorrichtung 1 erläutert.

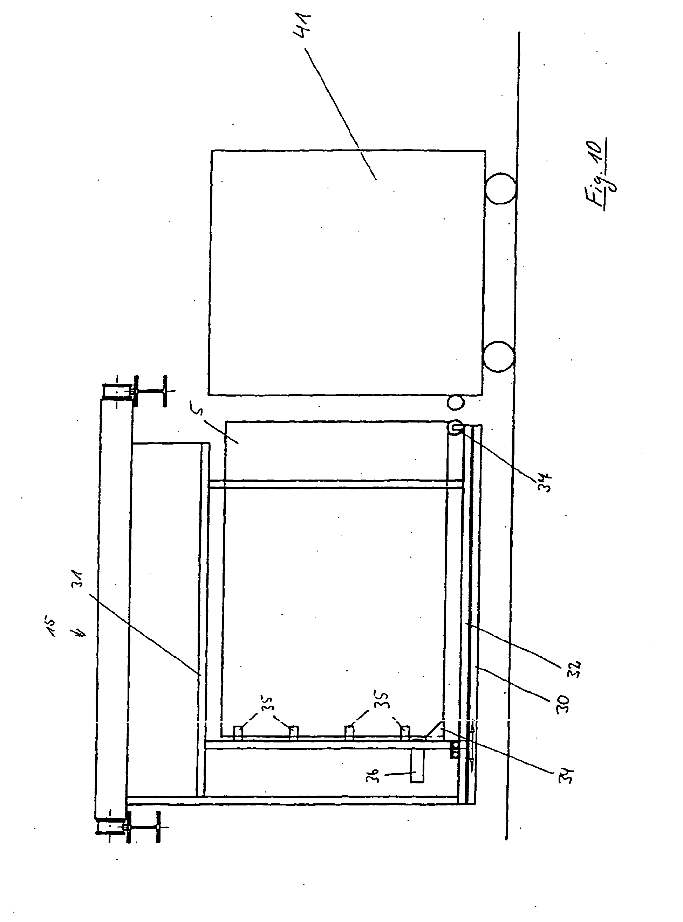

In der Zuschnittlinie 2 werden Glasrohplatten (nicht gezeigt) in Scheiben 5 unterteilt. Die Scheiben 5 werden von der Zuschnittlinie 2 quer auf einen Fördertisch 3 abgefördert und auf dem Fördertisch 2 auf Saugarme 4 aufgefördert. Die Saugarme 4 saugen die Scheibe 5 an und richten sie danach in eine Vertikalposition auf. Anschließend wird die Scheibe 5 auf Rollen der Luftkissenwand 6 aufgesetzt und entlang der Förderrichtung 9 in die Drehstation 10 gefördert. In der Drehstation 10 kann die Scheibe um 180 Grad gedreht werden, wenn eine bestimmte Ausrichtung der beschichteten Seite gewünscht ist. Aus der Drehstation 10 wird die Scheibe 5 auf eine Rollenbahn 44 der Luftkissenwand mit Ausschub 12 gefördert. Von der Luftkissenwand mit Ausschub 12 wird die Scheibe 5 mit einem Ausschieber 43 in einen verfahrbaren Speicher 15 eingefördert (Fig. 7 bis Fig. 9), wobei eine erste Glaskante die Rolle 37 überrollt und auf dieser aufsitzt sowie in die Zentrierecke 34 über die Klauen 35 gelangt und anschließend in den verfahrbaren Speicher 15 weiter eingeschoben wird. Der verfahrbare Speicher 15 taktet mit Hilfe einer Antriebseinheit (nicht gezeigt) quer zur Luftkissenwand 12 und nimmt in jedes Fach eine Glastafel auf, bis der Speicher voll ist. Zeitgleich verfährt die Antriebseinheit 16 einen verfahrbaren Speicher 15 (B) zu den einzelnen Fächerwagen und sortiert die jeweiligen Glasplatten ein. Wenn der verfahrbare Speicher 15 (B) leer ist und der verfahrbare Speicher 15 (A) (Fig. 1) voll ist, koppeln die Antriebseinheiten 16 von dem jeweiligen Speicher ab. Anschließend (Fig. 5) koppelt eine Antriebseinheit an den vollen Speicher 15 (A) an und eine weitere Antriebseinheit 16 an den leeren, verfahrbaren Speicher 15 (C). Nun ist der verfahrbare Speicher 15 (A) bereit, die Glastafeln einzusortieren und der verfahrbare Speicher 15 (C) ist bereit, Glastafeln 5 von der Luftkissenwand 12 aufzunehmen. Der leere, verfahrbare Speicher 15 (B) (Fig. 2) wird in einem Endbereich 24 der Verfahrbahn 14 mit einer Hubvorrichtung 27 angehoben und über die beiden anderen verfahrbaren Speicher 15 (A und C) verfahren und im Wartebereich 18 (Fig. 1) abgesetzt. Hier kann er verbleiben, bis der zu befüllende verfahrbare Speicher 15 voll ist und er erneut im Einschubbereich beladen werden kann. Dieser Ablauf wiederholt sich so oft, bis ein kompletter Lauf aus der Zuschnittlinie in den Fächerwagen einsortiert ist. Nachdem alle Fächerwagen 41 beladen sind, werden sie über ein Fördersystem auf dem Boden mit den Schienen 42 gleichzeitig in die Position III transportiert, wobei die Fächerwagen 41 in der Position III in beliebiger Reihenfolge weiter transportiert werden können. Die Fächerwagen 41 für den nächsten Lauf sind vorher in die Position I gebracht worden. Von hier werden sie gleichzeitig in die Position II transportiert, wobei die Fächerwagen 41 in der Position II automatisch zentriert und fixiert werden.

Bei einer Variante werden die beladenen Fächerwagen 41 von der Position II nicht durch den Verfahrweg der verfahrbaren Speicher austransportiert, sondern von der Position II nach der Position I austransportiert. Dabei werden die Fächerwagen 41 für den nächsten Lauf in der Position III bereitgestellt und nach Abfördern der Fächerwagen 41 aus der Position II durch die Verfahrbahn 14 hindurch in die Position II gebracht.

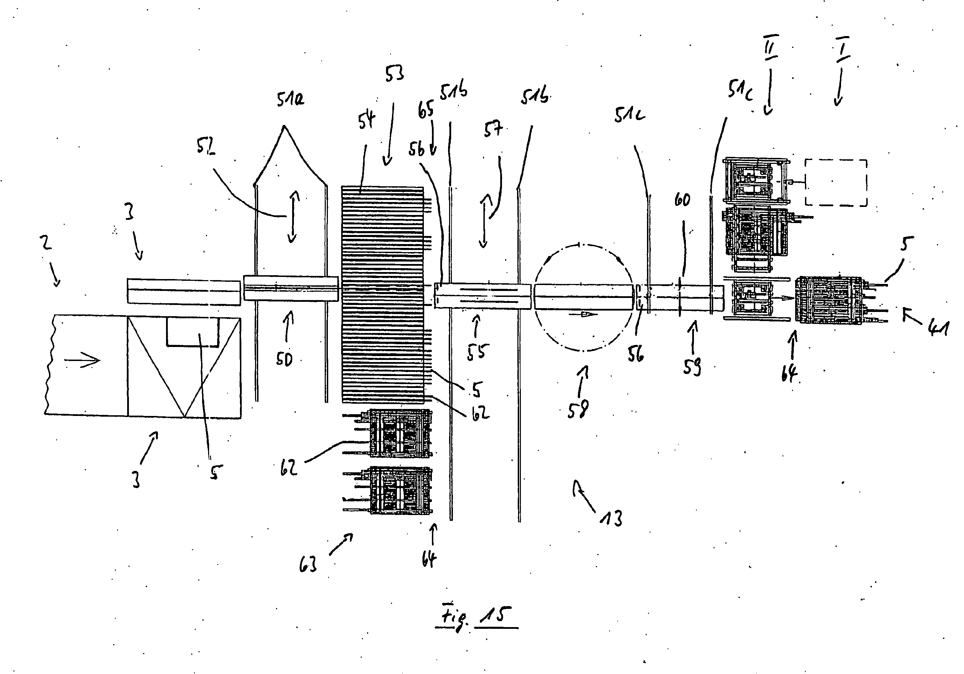

Die erfindungsgemäße Vorrichtung zum Sortieren von zugeschnittenen Glastafeln 5 oder Zustellscheiben 62 (Fig. 14, 15) besitzt eine Zuschnittlinie 2, auf der Glastafeln in Einzelscheiben zerteilt werden. An der Zuschnittlinie 2 schließt sich ein Fördertisch 3 an, welcher die Glastafeln 5 oder Zustellscheiben 62 vertikal oder in einem bestimmten Winkel zur Vertikalen aufrichtet. Ein Shuttle 50 mit Ausschub, z.B. als Luftkissenwand mit Ausschub 12 nach der vorher beschriebenen, auf dem Sachgebiet verwendeten Ausführungsform, übernimmt die Glastafeln 5 oder Zustellscheiben 62 aus dem Fördertisch 3. Das Shuttle 50 ist auf zwei Schienen 51a horizontal in der Förderrichtung 52 verschieblich, welche senkrecht zur Ebene der Glastafeln 5 oder Zustellscheiben 62 im Shuttle 50 steht. Dem Shuttle 50 ist ein Zwischenspeicher 53 mit Fächern 54 nachgeordnet. Die Fächer 54 sind in Reihe senkrecht zur Förderrichtung 52 und vertikal oder in einem bestimmten Winkel zur Vertikalen geneigt. Das Shuttle 50 verfügt vorzugsweise über eine Fördereinrichtung, welche die Glastafeln 5 oder Zustellscheiben 62 in die vorher bestimmten Fächer 54 einschiebt oder -zieht. Aufgrund der horizontalen Verfahrbarkeit des Shuttles 50 auf den Schienen 51a können sämtliche Fächer 54 des Zwischenspeichers 53 bedient werden. Der Zwischenspeicher 53 verfügt über Fördereinrichtungen, mit der die Glastafeln 5 oder Zustellscheiben 62 bis zum Ende des Speicherfaches transportiert werden, insbesondere soweit, dass alle Glastafeln 5 oder Zustellscheiben 62 im Zwischenspeicher 53 geringfügig ein gleiches bestimmtes Maß über das Ende des Speicherfaches 54 überstehen (Fig. 14, 15). Am Zwischenspeicher 53 gegenüberliegend dem Shuttle 50 befindet sich ein weiteres Shuttle 55 an der Seite der Enden 65 der Speicherfächer 54, so dass der Zwischenspeicher 54 zwischen dem Shuttle 50 und dem Shuttle 55 positioniert ist. Das Shuttle 55 hat einen oder mehrere Greifer 56, mit dem die Glastafeln 5 oder Zustellscheiben 62 vorzugsweise in der Reihenfolge der Weiterverarbeitung aus dem Zwischenspeicher 53 auf das Shuttle 55 gezogen werden. Bei Bedarf werden die Glastafeln 5 oder Zustellscheiben 62 auf einen bestimmten Winkel zur Vertikalen für die Weiterverarbeitung ausgerichtet. Das Shuttle 55 ist auf zwei Schienen 51b horizontal in der Förderrichtung 57 verfahrbar, so dass sämtliche Fächer 54 des Zwischenspeichers 53 bedienbar sind. Die Förderrichtung 57 ist parallel zur Förderrichtung 52 des Shuttles 50 und steht senkrecht auf der Ebene der Fächer 54. Vom Shuttle 55 werden die Glastafeln 5 oder Zustellscheiben 62 einzeln oder gleichzeitig, vorzugsweise mit Hilfe der Greifer 56 am Shuttle 55, an den Übernahmeförderer 58 übergeben. Der Übernahmeförderer 58 kann vorzugsweise zur Anpassung der Glastafeloberseite zu einer bestimmten Richtung für die Weiterverarbeitung um die vertikale Mittelachse um 180 ° drehen.

Dem Übernahmeförderer 58 ist ein Shuttle 59 auf zwei Schienen 51c nachgeordnet. Das Shuttle 59 verfügt vorzugsweise über Greifer 56, welche die Glastafeln 5 oder Zustellscheiben 62 vom Übernahmeförderer 58 aufnehmen und auf das Shuttle 59 schieben. Das Shuttle 59 ist auf Schienen 51c in Förderrichtung 60 verschiebbar, welche vorzugsweise parallel zu den Förderrichtungen 52, 57 ist. Der Übernahmeförderer 58 ist somit zwischen dem Shuttle 55 und 59 angeordnet. An den Schienen 51c des Shuttles 59 gegenüber dem Übernahmeförderer 58 sind eine oder mehrere Fächerwagen 41, 63 positioniert, die im Wesentlichen denen der vorher beschriebenen, auf dem Sachgebiet verwendeten Ausführungsform entsprechen. Die Fächerwagen 41, 63 können fest positioniert sein oder mit Hilfe einer Fördereinrichtung entlang der Schienenbahn takten. Das Shuttle 60 fährt auf der Schiene 51c zum jeweiligen Fächerwagen 41 im Ladebereich 2 und schiebt die Glastafeln 5 vorzugsweise mit Greifern 56 in die Fächerwagen 41. Die Fächerwagen 41 sind nach dem Ladevorgang vom Ladebereich 2 in den Bereitstellungsbereich I verschieblich.

Auf den Schienen 51c befindet sich neben dem Shuttle 59 noch ein weiteres Shuttle 61 für Zustellscheiben 62, welches Zustellscheiben 62 in die Fächerwagen 63 für Zustellscheiben 62 analog wie das Shuttle 59 einführt. Das Shuttle 61 ist vorzugsweise vor den Fächerwagen 63 positioniert. Während der Arbeitsphase des Shuttles 61 ist das Shuttle 59 vorzugsweise in Warteposition (Fig. 14).

Die Fächerwagen 63 für Zustellscheiben 62 können auch in Verlängerung des Zwischenspeichers 53 senkrecht zu den Fächern 54 aufgestellt sein, wobei hierzu die Schienen 51b entsprechend bis zu den Fächerwagen 63 verlängert sein müssen, damit das Shuttle 55 die Fächerwagen 63 bedienen kann (Fig. 15). Die Zustellscheiben 62 werden vom Shuttle 55 mit dem Greifer 56 vom Zwischenspeicher 53 aufgenommen, anschließend fährt das Shuttle 55 auf eine entsprechende Position vor den Fächerwagen 63 und schiebt die Zustellscheiben 62 in die Fächerwagen 63 ein. Das Shuttle 55 kann die Zustellscheiben 62 auch nach der Übernahme an den Übernahmeförderer 58 zur Drehung um 180 ° übergeben, um die Anordnung der Glasoberseite nachträglich zu verändern. Darauf folgend werden die Zustellscheiben wieder vom Shuttle 55 aufgenommen und dem Fächerwagen 63 zugeführt.

Bei der auf dem Sachgebiet verwendeten Vorrichtung und dem auf dem Sachgebiet verwendeten Verfahren ist von Vorteil, dass das Einsortieren sehr schnell ohne Totzeiten ablaufen kann, wobei der Kreislauf mehrerer verfahrbarer Speicher bewirkt, dass durch den ersparten Rückweg der Speicher zusätzliche Leerlaufzeiten verhindert werden.

Durch den Rücktransport der verfahrbaren Speicher übereinander ist der Flächenbedarf gering, wobei zusätzlich die Position der Schichtseite der Glastafeln in den Fächerwägen frei gewählt werden kann.

Die Verwendung eines erfindungsgemäß nicht verfahrbaren Zwischenspeichers hat den Vorteil, dass aufgrund der einfachen Bauweise geringe Kosten anfallen sowie ein sehr geringer Wartungsaufwand notwendig ist und nur ein geringer Raumbedarf wegen der kompakten Bauweise erforderlich ist. Das Einsortieren kann auch hier ohne Totzeiten wegen der kurzen Fahrwege des Shuttles erfolgen.

## Patentansprüche

1. Verfahren zum Sortieren von Glastafeln, wobei die Glastafeln eines Fertigungslaufs von einer Bearbeitungslinie sortierend in Speichereinrichtungen oder Weiterverarbeitungslinien eingeschleust werden, wobei eine Zwischenspeicher- und Sortiereinrichtung (13) verwendet wird, die mit den Glastafeln (5) eines Fertigungslaufs insbesondere kontinuierlich beschickt wird und die Glastafeln (5) sortierend zuordnend in Speichereinrichtungen (41, 63) oder Weiterbearbeitungslinien einschleust, **dadurch gekennzeichnet, daß** ein Zwischenspeicher (53) der Zwischenspeicher- und Sortiereinrichtung (13) verwendet wird, der nicht verfahrbar ist und auf den die Glastafeln (5) oder Zustellscheiben (62) von einem verfahrbaren Shuttle (50) gefördert werden, wobei die Glastafeln (5) oder Zustellscheiben (62) aus dem Zwischenspeicher (53) auf ein weiteres verfahrbares Shuttle (55) gefördert werden.

2. Verfahren nach Anspruch 1,
**dadurch gekennzeichnet , dass**
die Glastafeln (5) oder Zustellscheiben (62) vor der Übergabe an das verfahrbare Shuttle (50) im Wesentlichen vertikal aufgerichtet werden.

3. Verfahren nach Anspruch 1 und/oder 2,
**dadurch gekennzeichnet, dass**
die Glastafeln (5) oder Zustellscheiben (62) vorzugsweise mit Fördereinrichtungen im Shuttle (50) und/oder Fördereinrichtungen im Zwischenspeicher (53) vom Shuttle (50) in Fächer (54) des Zwischenspeichers (53) eingeschoben bzw. gezogen werden.

4. Verfahren nach Anspruch 3,
**dadurch gekennzeichnet , dass**
die Glastafeln bis zum Ende (65) des Faches (54) transportiert werden, so dass diese bündig am Ende (65) abschließen, insbesondere um ein bestimmtes Maß am Ende (65) des Faches (54) überstehen.

5. Verfahren nach Anspruch 3 und/oder 4,
**dadurch gekennzeichnet, dass**
die Glastafeln (5) oder Zustellscheiben (62) aus den Fächern (54) von dem weiteren verfahrbaren Shuttle (55) mit Hilfe von Greifern (56) auf das Shuttle (55) gefördert werden.

6. Verfahren nach einem oder mehreren der Ansprüche 1 bis 5,
**dadurch gekennzeichnet , dass**
die Glastafeln (5) oder Zustellscheiben (62) vorzugsweise mit Hilfe von Greifern (56) horizontal vom Shuttle (55) in einen Übernahmeförderer (58) gefördert werden.

7. Verfahren einem oder mehreren der Ansprüche 1 bis 6,
**dadurch gekennzeichnet ,dass**
die Glastafeln (5) oder Zustellscheiben (62) in dem Übernahmeförderer (58) um 180 ° in einer vertikalen Mittelachse gedreht werden, wenn eine bestimmte Ausrichtung der Glastafeln (5) oder Zustellscheiben (62) gewünscht ist.

8. Verfahren nach Anspruch 6 und/oder 7,
**dadurch gekennzeichnet, dass**
die Glastafeln (5) oder Zustellscheiben (62) vorzugsweise mit Hilfe von Greifern (56) vom Übernahmeförderer (58) auf ein verfahrbares Shuttle (59, 61) gefördert werden.

9. Verfahren nach Anspruch 8,
**dadurch gekennzeichnet , dass**
die Glastafeln (5) oder Zustellscheiben (62) vorzugsweise mit Greifern (56) vom verfahrbaren Shuttle (59, 61) in den Fächerwagen (41, 63) gefördert werden, wobei vorzugsweise die Glastafeln (5) oder Zustellscheiben (62) an der Beschickungsseite (64) bündig abschließen.

10. Verfahren nach einem oder mehreren der Ansprüche 1 bis 9,
**dadurch gekennzeichnet, dass**
die Zustellscheiben (62) mit Greifern (56) aus den Fächern (54) des Zwischenspeichers (53) auf das Shuttle (55) gefördert werden und vom Shuttle (55) mit Greifern (56) in die Fächerwagen (63) befördert werden.

11. Verfahren nach Anspruch 10,
**dadurch gekennzeichnet, dass**
die Zustellscheiben (62) vor der Förderung in die Fächerwagen (63) um 180 ° in einer vertikalen Drehachse in dem Übernahmeförderer (58) gedreht werden.

12. Vorrichtung zum Sortieren von Glastafeln (5) oder Zustellscheiben (62), wobei eine die Glastafeln bzw. Zustellscheiben (5, 62) zwischenspeichernde und sortierende Zwischenspeicher- und Sortiereinrichtung (13) vorhanden ist, die einen nicht verschieblichen Zwischenspeicher (53) aufweist und an die die Glastafeln (5) bzw. Zustellscheiben (62) eines Fertigungslaufs insbesondere kontinuierlich übergebbar sind, und wobei Einrichtungen (41, 63) vorhanden sind, in welche Glastafeln oder Zustellscheiben (5, 62) aus dem Zwischenspeicher (53) sortierend einschleusbar sind, **dadurch gekennzeichnet**, daβ dem Zwischenspeicher (53) ein verfahrbares Shuttle (50) vorgeordnet ist, und neben dem Zwischenspeicher (53) ein weiteres verfahrbares Shuttle (55) gegenüberliegend dem Shuttle (50) angeordnet ist.

13. Vorrichtung nach Anspruch 12,
**dadurch gekennzeichnet , dass**
die Einrichtungen (41, 63) Fächerwagen (41), Fächerwagen (63) für Zustellscheiben (62) und/oder weitere Bearbeitungsstationen sind.

14. Vorrichtung nach Anspruch 12 und/oder 13,
**dadurch gekennzeichnet, dass**
die Vorrichtung eine Zuschnittlinie (2) besitzt, auf der Glasrohplatten in Einzelscheiben bzw. Glastafeln (5) zerteilt werden, wobei sich an die Zuschnittlinie eine Einrichtung zum Aufrichten von Glastafeln (5) oder Zustellscheiben (62) anschließt, welche einen Fördertisch (3) umfasst, welcher auf den Fördertisch (3) aufliegende Scheiben (5) oder Zustellscheiben (62) aufstellen und an das Shuttle (50) übergeben kann.

15. Vorrichtung nach einem oder mehreren der Ansprüche 12 bis 14,
**dadurch gekennzeichnet, dass**
das Shuttle (50) auf zwei Schienen (51a) horizontal verfahrbar ist, wobei die Schienen (51a) senkrecht auf der Ebene einer vom Shuttle (50) transportierten Glastafel oder Zustellscheibe (5, 62) stehen und vorzugsweise über eine Fördereinrichtung zum Fördern von Glastafeln oder Zustellscheiben (5, 62) verfügt.

16. Vorrichtung nach einem oder mehreren der Ansprüche 12 bis 15,
**dadurch gekennzeichnet , dass**
der Zwischenspeicher (53) vertikale oder um einen bestimmen Winkel zur Vertikalen geneigte Fächer (54) in Reihe zur Lagerung von Glastafeln oder Zustellscheiben (5, 62) aufweist und die Ebenen der Fächer (54) parallel zur Ebene der Glastafeln bzw. Zustellscheiben (5, 62) im Shuttle (50) sind.

17. Vorrichtung nach Anspruch 16,
**dadurch gekennzeichnet , dass**
aufgrund der Verfahrbarkeit des Shuttles (50) sämtliche Fächer (54) des Zwischenspeichers (53) vom Shuttle (50) bedienbar sind und vorzugsweise die Fördereinrichtung im Shuttle (50) die Glastafeln bzw. Zustellscheiben (5, 62) in die Fächer (54) einschiebt.

18. Vorrichtung nach Anspruch 16 und/oder 17,
**dadurch gekennzeichnet, dass**
eine Fördereinrichtung im Zwischenspeicher (53) die Glastafeln bzw. Zustellscheiben (5, 62) bis zum Ende der Fächer (54) fördert, so dass sämtliche Glastafeln bzw. Zustellscheiben (5, 62) bündig abschließen, vorzugsweise um ein konstantes Maß aus den Fächern (54) überstehen.

19. Vorrichtung nach einem oder mehreren der Ansprüche 16 bis 18,
**dadurch gekennzeichnet , dass**
das Shuttle (55) gegenüberliegend dem Shuttle (50) verfahrbar auf Schienen (51b) mit gleicher Ausrichtung wie das Shuttle (50) positioniert ist, wobei das Shuttle (55) über vorzugsweise einen Greifer (56) verfügt, welcher die Glastafeln bzw. Zustellscheiben (5, 62) aus den Fächern (54) vorzugsweise in der Reihenfolge der Weiterverarbeitung auf das Shuttle (55) fördert.

20. Vorrichtung nach einem oder mehreren der Ansprüche 12 bis 19,
**dadurch gekennzeichnet , dass**
dem Shuttle (55) ein Übernahmeförderer (58) nachgeordnet ist, welcher die Glastateln bzw. Zustellscheiben (5, 62) um 180 ° in einer vertikalen Mittelachse verdrehen kann, wobei die Glastafeln bzw. Zustellscheiben (5, 62) vorzugsweise vom Greifer (56) vom Shuttle (55) in den Übernahmeförderer (58) transportierbar sind.

21. Vorrichtung nach Anspruch 20,
**dadurch gekennzeichnet , dass**
dem Übernahmeförderer (58) zwei verfahrbare Shuttles (59, 61) auf Schienen (51c) nachgeordnet sind, welche vorzugsweise über Greifer (56) verfügen, wobei ein Shuttle (59) Glastafeln (5) und ein Shuttle (61) Zustellscheiben (62) fördert.

22. Vorrichtung nach Anspruch 21,
**dadurch gekennzeichnet , dass**
die Glastafeln (5) vorzugsweise vom Greifer (56) im Shuttle (59) in die Fächerwagen (41) und die Zustellscheiben (62) vorzugsweise vom Greifer (56) im Shuttle (61) in die Fächerwagen (63) förderbar sind, wobei die Glastafeln bzw. Zustellscheiben (5, 62) bündig an der Einschiebseite der Fächerwagen (41, 63) abschließen.

23. Vorrichtung nach Anspruch 22,
**dadurch gekennzeichnet, dass**
die Fächerwagen (41, 63) im Ladebereich (II) vom Shuttle (59, 61) beladen werden und erst nach dem Ladevorgang in den Bereitstellungsbereich (I) verschiebbar sind.

24. Vorrichtung nach einem oder mehreren der Ansprüche 12 bis 23,
**dadurch gekennzeichnet , dass**
vom Shuttle (55) Zustellscheiben (62) in die Fächerwagen (63) förderbar sind, wobei die Fächerwagen (63) an dem Zwischenspeicher (53) angeordnet sind.

## Claims

1. Process for sorting glass sheets, in which process the glass sheets of a production run are fed from a processing line in a sorting manner into storage devices or further-processing lines, use being made of an intermediate-storage and sorting device (13) which is loaded in particular continuously with the glass sheets (5) of a production run and feeds the glass sheets (5) in a sorting allocating manner into storage devices (41, 63) or further-processing lines, **characterised in that** an intermediate store (53) of the intermediate-storage and sorting device (13) is used, which store is not movable and onto which the glass sheets (5) or feed panes (62) are conveyed by a movable shuttle (50), the glass sheets (5) or feed panes (62) being conveyed from the intermediate store (53) onto a further movable shuttle (55).

2. Process according to Claim 1,
**characterised in that**
the glass sheets (5) or feed panes (62) are set substantially vertical before being transferred to the movable shuttle (50).

3. Process according to Claim 1 and/or 2,
**characterised in that**
the glass sheets (5) or feed panes (62) are pushed or pulled from the shuttle (50) into compartments (54) of the intermediate store (53) preferably by conveying devices in the shuttle (50) and/or conveying devices in the intermediate store (53), respectively.

4. Process according to Claim 3,
**characterised in that**
the glass sheets are transported up to the end (65) of the compartment (54) so that they terminate flush at the end (65), in particular protrude by a certain amount at the end (65) of the compartment (54).

5. Process according to Claim 3 and/or 4,
**characterised in that**
the glass sheets (5) or feed panes (62) are conveyed from the compartments (54) by the further movable shuttle (55) with the aid of grippers (56) onto the shuttle (55).

6. Process according to one or more of Claims 1 to 5,
**characterised in that**
the glass sheets (5) or feed panes (62) are conveyed preferably with the aid of grippers (56) horizontally from the shuttle (55) into a transfer conveyor (58).

7. Process according to one or more of Claims 1 to 6,
**characterised in that**
the glass sheets (5) or feed panes (62) are rotated in the transfer conveyor (58) by 180° on a vertical centre axis if a specific orientation of the glass sheets (5) or feed panes (62) is desired.

8. Process according to Claim 6 and/or 7,
**characterised in that**
the glass sheets (5) or feed panes (62) are conveyed preferably with the aid of grippers (56) from the transfer conveyor (58) onto a movable shuttle (59, 61).

9. Process according to Claim 8,
**characterised in that**
the glass sheets (5) or feed panes (62) are conveyed preferably by grippers (56) from the movable shuttle (59, 61) into the compartmented carriage (41, 63), the glass sheets (5) or feed panes (62) preferably terminating flush on the loading side (64).

10. Process according to one or more of Claims 1 to 9,
**characterised in that**
the feed panes (62) are conveyed by grippers (56) from the compartments (54) of the intermediate store (53) onto the shuttle (55) and are conveyed from the shuttle (55) by grippers (56) into the compartmented carriages (63).

11. Process according to Claim 10,
**characterised in that**
the feed panes (62) are rotated by 180° on a vertical axis of rotation in the transfer conveyor (58) before being conveyed into the compartmented carriages (63).

12. Apparatus for sorting glass sheets (5) or feed panes (62), in which apparatus there is an intermediate-storage and sorting device (13) which intermediately stores and sorts the glass sheets and feed panes (5, 62), which has a non-displaceable intermediate store (53) and to which the glass sheets (5) and feed panes (62) of a production run can be transferred in particular continuously, and in which apparatus there are devices (41, 63) into which glass sheets or feed panes (5, 62) can be fed in a sorting manner from the intermediate store (53), **characterised in that** a movable shuttle (50) is arranged upstream of the intermediate store (53), and a further movable shuttle (55) is arranged beside the intermediate store (53), opposite the shuttle (50).

13. Apparatus according to Claim 12,
**characterised in that**
the devices (41, 63) are compartmented carriages (41), compartmented carriages (63) for feed panes (62) and/or further processing stations.

14. Apparatus according to Claim 12 and/or 13,
**characterised in that**
the apparatus has a cutting-up line (2), on which rough glass plates are divided up into individual panes or glass sheets (5), the cutting-up line being followed by a device which serves for setting glass sheets (5) or feed panes (62) upright and comprises a conveying table (3) which can set panes (5) or feed panes (62), lying on the conveying table (3), upright and transfer them to the shuttle (50).

15. Apparatus according to one or more of Claims 12 to 14,
**characterised in that**
the shuttle (50) is horizontally movable on two rails (51a), the rails (51a) being perpendicular to the plane of a glass sheet or feed pane (5, 62) being transported by the shuttle (50) and preferably having a conveying device for conveying glass sheets or feed panes (5, 62).

16. Apparatus according to one or more of Claims 12 to 15,
**characterised in that**
the intermediate store (53) has compartments (54) which are vertical or inclined by a specific angle to the vertical, are in a row and serve for storing glass sheets or feed panes (5, 62), and the planes of the compartments (54) are parallel to the plane of the glass sheets and feed panes (5, 62) in the shuttle (50).

17. Apparatus according to Claim 16,
**characterised in that**,
owing to the movability of the shuttle (50), all the compartments (54) of the intermediate store (53) can be served by the shuttle (50) and preferably the conveying device in the shuttle (50) pushes the glass sheets and feed panes (5, 62) into the compartments (54).

18. Apparatus according to Claim 16 and/or 17,
**characterised in that**
a conveying device in the intermediate store (53) conveys the glass sheets and feed panes (5, 62) up to the end of the compartments (54) so that all the glass sheets and feed panels (5, 62) terminate flush, preferably protrude by a constant amount from the compartments (54).

19. Apparatus according to one or more of Claims 16 to 18,
**characterised in that**
the shuttle (55) is positioned opposite the shuttle (50) movably on rails (51b) with the same orientation as the shuttle (50), the shuttle (55) preferably having a gripper (56) which conveys the glass sheets and feed panes (5, 62) from the compartments (54), preferably in the order of further processing, onto the shuttle (55).

20. Apparatus according to one or more of Claims 12 to 19,
**characterised in that**
a transfer conveyor (58) is arranged downstream of the shuttle (55), which conveyor can rotate the glass sheets and feed panes (5, 62) by 180° on a vertical centre axis, the glass sheets and feed panes (5, 62) being transportable from the shuttle (55) into the transfer conveyor (58) preferably by the gripper (56).

21. Apparatus according to Claim 20,
**characterised in that**
two movable shuttles (59, 61) are arranged downstream of the transfer conveyor (58) on rails (51c), which shuttles preferably have grippers (56), one shuttle (59) conveying glass sheets (5) and one shuttle (61) conveying feed panes (62).

22. Apparatus according to Claim 21,
**characterised in that**
the glass sheets (5) can be conveyed into the compartmented carriages (41) preferably by the gripper (56) in the shuttle (59), and the feed panes (62) can be conveyed into the compartmented carriages (63) preferably by the gripper (56) in the shuttle (61), the glass sheets and feed panes (5, 62) terminating flush on the pushing-in side of the compartmented carriages (41, 63).

23. Apparatus according to Claim 22,
**characterised in that**
the compartmented carriages (41, 63) are loaded in the loading area (II) by the shuttle (59, 61) and are displaceable into the pick-up area (I) only after the loading operation.

24. Apparatus according to one or more of Claims 12 to 23,
**characterised in that**
feed panes (62) can be conveyed from the shuttle (55) into the compartmented carriages (63), with the compartmented carriages (63) being arranged at the intermediate store (53).

## Revendications

1. Procédé de tri de plaques de verre, les plaques de verre d'un flux de fabrication étant introduites depuis une ligne de traitement sous forme triée dans des dispositifs de stockage ou des lignes de traitement ultérieur, un dispositif de stockage temporaire et de tri (13) étant utilisé, lequel reçoit, en particulier en continu, les plaques de verre (5) d'un flux de fabrication et en fonction du tri effectué introduit les plaques de verre (5) dans des dispositifs de stockage (41, 63) ou des lignes de traitement ultérieur, **caractérisé en ce que** l'on utilise une unité de stockage temporaire (53) du dispositif de stockage temporaire et de tri (13), laquelle n'est pas mobile et sur laquelle les plaques de verre (5) ou des vitres de parement (62) sont acheminées depuis une desserte mobile (50), les plaques de verre (5) ou les vitres de parement (62) étant convoyées à partir de l'unité de stockage temporaire (53) sur une autre desserte mobile (55).

2. Procédé selon la revendication 1, **caractérisé en ce que** les plaques de verre (5) ou les vitres de parement (62) sont orientées sensiblement dans le sens vertical avant leur transfert sur la desserte mobile (50).

3. Procédé selon la revendication 1 et/ou 2, **caractérisé en ce que** les plaques de verre (5) ou les vitres de parement (62) sont poussées ou tirées depuis la desserte mobile (50) dans des compartiments (54) de l'unité de stockage temporaire (53), de préférence avec des convoyeurs de la desserte mobile et/ou des convoyeurs de l'unité de stockage temporaire (53).

4. Procédé selon la revendication 3, **caractérisé en ce que** les plaques de verre (5) sont transportées jusqu'à l'extrémité (65) du compartiment (54), de telle sorte qu'elles sont situées à fleur de l'extrémité (65), en particulier s'avancent en saillie sur une distance déterminée hors de l'extrémité (65) du compartiment (54).

5. Procédé selon la revendication 3 et/ou 4, **caractérisé en ce que** les plaques de verre (5) ou les vitres de parement (62) sont transportées hors des compartiments (54) sur la desserte (55) au moyen d'organes de préhension (56) de l'autre desserte mobile (55).

6. Procédé selon une ou plusieurs des revendications 1 à 5, **caractérisé en ce que** les plaques de verre (5) ou les vitres de parement (62) sont transportées horizontalement, de préférence au moyen d'organes de préhension (56), depuis la desserte (55) dans un convoyeur de transfert (58).

7. Procédé selon une ou plusieurs des revendications 1 à 6, **caractérisé en ce que** les plaques de verre (5) ou les vitres de parement (62) dans le convoyeur de transfert (58) sont tournées sur 180° autour d'un axe médian vertical, lorsqu'une orientation déterminée des plaques de verre (5) ou des vitres de parement (62) est souhaitée.

8. Procédé selon la revendication 6 et/ou 7, **caractérisé en ce que** les plaques de verre (5) ou les vitres de parement (62) sont transportées de préférence au moyen d'organes de préhension (56) depuis le convoyeur de transfert (58) sur une desserte mobile (59, 61).

9. Procédé selon la revendication 8, **caractérisé en ce que** les plaques de verre (5) ou les vitres de parement (62) sont transportées de préférence par des organes de préhension (56) depuis la desserte mobile (59, 61) dans le chariot à compartiments (41, 63), les plaques de verre (5) ou vitres de parement (62) étant situées de préférence à fleur du côté de chargement (64).

10. Procédé selon une ou plusieurs des revendications 1 à 9, **caractérisé en ce que** les vitres de parement (62) sont transportées par des organes de préhension (56) hors des compartiments (54) de l'unité de stockage temporaire (53) sur la desserte (55) et sont transférées au moyen d'organes de préhension (56) depuis la desserte (55) dans les chariots à compartiments (63).

11. Procédé selon la revendication 10, **caractérisé en ce que** les vitres de parement (62), avant le transport dans le chariot à compartiments (63), sont tournées sur 180° autour d'un axe de rotation vertical dans le convoyeur de transfert (58).

12. Dispositif de tri de plaques de verre (5) ou vitres de parement (62), sachant que pour le stockage temporaire et le tri des plaques de verre ou vitres de parement (5, 62) il est prévu un dispositif de stockage temporaire et de tri (13), qui comporte une unité de stockage temporaire (53) et qui reçoit, en particulier en continu, les plaques de verre (5) ou vitres de parement (62) d'un flux de fabrication, et sachant qu'il est prévu des dispositifs (41, 63) dans lesquels les plaques de verre ou vitres de parement (5, 62) peuvent être introduites sous forme triée en sortie de l'unité de stockage temporaire (53), **caractérisé en ce qu'**une desserte mobile (50) est montée en amont de l'unité de stockage temporaire (53) et une autre desserte mobile (55), en face de la desserte (50), est disposée à côté de l'unité de stockage temporaire (53).

13. Dispositif selon la revendication 12, **caractérisé en ce que** les dispositifs (41, 63) sont des chariots à compartiments (41), des chariots à compartiments (63) pour les vitres de parement (62) et/ou d'autres postes de traitement.

14. Dispositif selon la revendication 12 et/ou 13, **caractérisé en ce que** le dispositif comporte une ligne de découpe (2), sur laquelle des plaques de verre brutes sont découpées en vitres individuelles ou plaques de verre (5), un dispositif pour l'orientation des plaques de verre (5) ou vitres de parement (62) étant monté dans le prolongement de la ligne de découpe et comportant une table de transport (3), par laquelle des plaques de verre (5) ou vitres de parement (62) posées sur la table de transport (3) peuvent être amenées en position verticale et être transférées sur la desserte (50).

15. Dispositif selon une ou plusieurs des revendications 12 à 14, **caractérisé en ce que** la desserte (50) est mobile horizontalement sur deux rails (51a), les rails (51a) étant disposés perpendiculairement sur le plan d'une plaque de verre ou vitre de parement (5, 62), transportée par la desserte (50), et comporte de préférence un convoyeur destiné à transporter les plaques de verre ou vitres de parement (5, 62).

16. Dispositif selon une ou plusieurs des revendications 12 à 15, **caractérisé en ce que** l'unité de stockage temporaire (53) comporte des compartiments (54), verticaux ou inclinés selon un angle déterminé par rapport à la verticale, pour le stockage des plaques de verre ou vitres de parement (5, 62), et les plans des compartiments (54) sont parallèles au plan des plaques de verre ou vitres de parement (5, 62) dans la desserte (50).

17. Dispositif selon la revendication 16, **caractérisé en ce que**, compte tenu de la mobilité de la desserte (50), tous les compartiments (54) de l'unité de stockage temporaire (53) peuvent être servis par la desserte (50) et de préférence le convoyeur de la desserte (50) fait coulisser les plaques de verre ou vitres de parement (5, 62) à l'intérieur des compartiments (54).

18. Dispositif selon la revendication 16 et/ou 17, **caractérisé en ce qu'**un convoyeur de l'unité de stockage temporaire (53) transporte les plaques de verre ou vitres de parement (5, 62) jusqu'à l'extrémité des compartiments (54), de telle sorte que toutes les plaques de verre ou vitres de parement (5, 62) sont disposées à fleur des compartiments (54), de préférence s'avancent en saillie sur une distance constante hors des compartiments (54).

19. Dispositif selon une ou plusieurs des revendications 16 à 18, **caractérisé en ce que** la desserte (55), en face de la desserte (50), est positionnée avec la même orientation que la desserte (50) de manière mobile sur des rails (51b), la desserte (55) comportant de préférence un organe de préhension (56), qui transporte les plaques de verre ou vitres de parement (5, 62) hors des compartiments (54), de préférence dans l'ordre du traitement ultérieur, sur la desserte (55).

20. Dispositif selon une ou plusieurs des revendications 12 à 19, **caractérisé en ce qu'**en aval de la desserte (55) est monté un convoyeur de transfert (58), qui peut faire tourner les plaques de verre ou vitres de parement (5, 62) sur 180° autour d'un axe médian vertical, les plaques de verre ou vitres de parement (5, 62) pouvant être transportées de préférence par l'organe de préhension (56) depuis la desserte (55) dans le convoyeur de transfert (58).

21. Dispositif selon la revendication 20, **caractérisé en ce qu'**en aval du convoyeur de transfert (58) sont montées deux dessertes (59, 61), mobiles sur des rails (51c), lesquelles comportent de préférence des organes de préhension (56), une desserte (59) transportant des plaques de verre (5) et une desserte (61) transportant des vitres de parement (62).

22. Dispositif selon la revendication 21, **caractérisé en ce que** les plaques de verre (5) peuvent être transportées de préférence par l'organe de préhension (56) de la desserte (59) dans les chariots à compartiments (41) et les vitres de parement (62) peuvent être transportées de préférence par l'organe de préhension (56) de la desserte (61) dans les chariots à compartiments (63), les plaques de verre ou vitres de parement (5, 62) étant situées à fleur du côté de chargement des chariots à compartiments (41, 63).

23. Dispositif selon la revendication 22, **caractérisé en ce que** les chariots à compartiments (41, 63) dans la zone de chargement (II) sont chargés par la desserte (59, 61) et uniquement après le processus de chargement peuvent être amenés dans la zone de mise à disposition (I).

24. Dispositif selon une ou plusieurs des revendications 12 à 23, **caractérisé en ce que** des vitres de parement (62) peuvent être transportées depuis la desserte (55) dans les chariots à compartiments (63), lesdits chariots à compartiments (63) étant disposés sur l'unité de stockage temporaire (53).
